# EUROPÄISCHE PATENTSCHRIFT

(11) **EP 2 613 987 B1**
(45) Veröffentlichungstag und Bekanntmachung des Hinweises auf die Patenterteilung: **06.07.2016**
(21) Anmeldenummer: 11731346.0
(22) Anmeldetag: 12.07.2011
(51) Int. Cl.: B60T 13/58, B60T 13/74

(54) **VERFAHREN ZUM EINSTELLEN DER VON EINER FESTSTELLBREMSE AUSGEÜBTEN KLEMMKRAFT, REGEL-BZW. STEUERGERÄT ZUR DURCHFÜHRUNG DES VERFAHRENS UND FAHRZEUGFESTSTELLBREMSE MIT SO EINEM STEUERGERÄT**
PARKING BRAKE CLAMPING FORCE ADJUSTMENT METHOD, CONTROL UNIT THEREFOR AND PARKING BRAKE IN A VEHICLE WITH SUCH A CONTROL UNIT
PROCEDE DE AJUSTEMENT D'UN FREIN DE STATIONNEMENT, APPAREIL DE COMMANDE POUR CELUI-CI ET FREIN DE STATIONNEMENT DANS UN VEHICULE ACES UN TEL APPAREIL DE COMMANDE

(30) Priorität: 10.09.2010 DE 102010040563
(43) Veröffentlichungstag der Anmeldung: 17.07.2013
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE)
(86) Internationale Anmeldenummer: PCT/EP2011/061810
(87) Internationale Veröffentlichungsnummer: WO 2012/031797

(56) Entgegenhaltungen:
- EP-A1- 1 614 600
- DE-A1-102006 011 546
- DE-A1-102009 028 505
- DE-A1-102009 029 525

## Beschreibung

Die Erfindung bezieht sich auf ein Verfahren zum Einstellen der von einer Feststellbremse ausgeübten Klemmkraft in einem Fahrzeug sowie auf ein Regel- bzw. Steuergerät für die Regelung bzw. Steuerung einer Feststellbremse zur Durchführung des Verfahrens sowie auf eine Feststellbremse in einem Fahrzeug mit einem derartigen Regel- und Steuergerät.

### Stand der Technik

Zum Stand der Technik zählen Feststell- bzw. Parkbremsen in Fahrzeugen zum dauerhaften Festsetzen des Fahrzeugs während des Stillstandes. Derartige Feststellbremsen können einen elektrischen Bremsmotor umfassen, der über ein Getriebe, welches beispielsweise als Spindelantrieb ausgeführt ist, unmittelbar auf die Bremskolben an den hydraulischen Radbremsen wirkt. Der elektrische Bremsmotor ist so dimensioniert, dass eine Klemmkraft erzeugt werden kann, welche das Fahrzeug bis zu einer bestimmten Hangneigung sicher festsetzt. Bei darüber hinausgehenden Hangneigungen kann zusätzlich eine hydraulische Klemmkraft über die hydraulische Bremsvorrichtung erzeugt werden, welche die Radbremsen umfasst.

Weiterhin ist die Schrift DE 10 2006 011546 A1 bekannt. Diese Schrift betrifft ein Verfahren zur Durchführung einer Bremskrafthaltefunktion bei einem Fahrzeug, welches eine Bremse, umfassend für die Räder wenigstens zweier Achsen jeweils ein mit dem Rad mitrotierbares Rotationsteil und ein nicht mit dem Rad mitrotierbares Anpressteil, enthält, wobei zur Aufbringung der Bremskraft das Anpressteil an das Rotationsteil angepresst wird, - bei dem mittels eines ersten Bremssystems durch Aufbau eines hydraulischen oder pneumatischen Drucks das Anpressteil an das Rotationsteil angepresst wird und dadurch eine erste Bremskraft auf die Räder wenigstens zweier Achsen des Kraftfahrzeugs aufgebracht wird, - bei dem mittels eines zweiten Bremssystems während des Vorliegens der ersten Bremskraft durch weiteres Anpressen des Anpressteils an das Rotationsteil eine zusätzliche zweite Bremskraft wenigstens auf die Räder einer der beiden Achsen aufgebracht wird, - bei dem nach Durchführung des weiteren Anpressens der hydraulische oder pneumatische Druck abgebaut wird.

### Offenbarung der Erfindung

Der Erfindung liegt die Aufgabe zugrunde, die Zuspann- bzw. Klemmkraft in der Feststellbremse eines Fahrzeugs in ökonomischer Weise bereitzustellen und zugleich die Belastung der Feststellbremse zu reduzieren.

Diese Aufgabe wird erfindungsgemäß mit den Merkmalen des Anspruches 1 sowie der unabhängigen Ansprüche 9 und 10 gelöst. Die Unteransprüche geben zweckmäßige Weiterbildungen an.

Mittels des erfindungsgemäßen Verfahrens kann die Klemmkraft in einer Feststellbremse zum Festsetzen eines Fahrzeugs im Stillstand ökonomisch bereitgestellt werden, wobei zugleich eine Bauteilüberlastung in den Komponenten der Feststellbremse, welche insbesondere auf einen hohen hydraulischen Druck zurückgeht, vermieden wird. Die Feststellbremse umfasst zum einen eine elektrische Bremsvorrichtung mit einem elektrischen Bremsmotor und zum andern eine hydraulische Bremsvorrichtung mit hydraulischen Radbremseinheiten, wobei der elektrische Bremsmotor unmittelbar auf den Bremskolben einer oder mehrerer Radbremseinheiten wirkt, welche Bestandteil der Feststellbremse sind. Die hydraulische Bremsvorrichtung ist hierbei bevorzugt mit der hydraulischen Fahrzeugbremse identisch, über die im Fahrbetrieb das Fahrzeug abgebremst wird. Über die elektrische und die hydraulische Bremsvorrichtung kann jeweils ein einstellbarer Anteil an der Gesamt-Klemmkraft erzeugt werden, wobei der jeweilige Anteil zwischen null und einem Maximalwert veränderlich einstellbar ist.

Bei einer Betätigung des Bremspedals durch den Fahrer entsteht in der hydraulischen Bremsvorrichtung ein Vordruck, der beim Festsetzen des Fahrzeugs im Stillstand und einer Beaufschlagung der Bremskolben über elektrische Bremsmotoren zu einer dauerhaften Bauteilbelastung in den Radbremseinheiten führen kann. Zur Herabsetzung des Drucks und der Bauteilbelastung ist bei dem erfindungsgemäßen Verfahren vorgesehen, dass im Falle eines einen Druckschwellenwert überschreitenden Vordrucks ein Einlassventil in der hydraulischen Bremsvorrichtung, welches zwischen einem Bremszylinder und der Radbremseinheit angeordnet ist, geschlossen wird. Die Ziel-Klemmkraft, welche zum Festsetzen des Fahrzeugs über die Feststellbremse eingestellt werden soll, wird durch Betätigung der elektromotorischen Bremsvorrichtung erreicht.

Durch das Schließen des Einlassventils wird der hydraulische Zweig im Bremskreis zwischen dem Einlassventil und der zugeordneten Radbremseinheit hydraulisch isoliert, so dass auch bei einer weiteren Bremspedalbetätigung der Druck nicht weiter erhöht wird. Das Volumen in diesem Abschnitt des Bremskreises ist im Vergleich zum gesamten Bremskreis einschließlich eventuell vorhandener Speichereinheiten signifikant reduziert. Bei einer Betätigung des elektrischen Bremsmotors wird der Bremskolben durch die Stellbewegung des Motors verstellt, was zu einer Volumenvergrößerung in dem isolierten Zweig des Bremskreises führt. Diese Volumenvergrößerung wirkt sich in dem isolierten Zweig verhältnismäßig stark aus, so dass entsprechend der Druck deutlich gesenkt und damit auch die Bauteilbelastung in der Radbremseinheit herabgesetzt wird.

Über die elektrische Bremsvorrichtung ist zugleich sichergestellt, dass die geforderte Ziel-Klemmkraft eingestellt werden kann. Über den Druck in der hydraulischen Bremsvorrichtung, welcher sich resultierend im Anschluss an die Betätigung des elektrischen Bremsmotors und die damit einhergehende Volumenvergrößerung einstellt, wird ergänzend eine zusätzliche hydraulische Klemmkraft erzeugt. Diese kann gegebenenfalls bei der Einstellung der elektrischen Klemmkraft in der Weise berücksichtigt werden, dass die Summe aus elektrischer und hydraulischer Klemmkraft die Ziel-Klemmkraft ergibt. Gemäß einer weiteren zweckmäßigen Ausführung ist dagegen vorgesehen, dass insbesondere im Falle des Überschreitens des Druck-Schwellenwerts zuerst das Einlassventil geschlossen und anschließend die elektromotorische Bremsvorrichtung zur Erzeugung der elektrischen Klemmkraft betätigt wird, welche auf die Ziel-Klemmkraft eingestellt wird. Der im hydraulischen System verbleibende Druck bewirkt eine zusätzliche, über die Ziel-Klemmkraft hinausgehende Kraft.

Es kann zweckmäßig sein, zusätzlich zu dem Einlassventil, welches sich zwischen dem Bremszylinder und der Radbremseinheit befindet, auch ein Umschaltventil im Bremskreis zu schließen, welches zwischen dem Bremszylinder und dem Einlassventil angeordnet ist. Üblicherweise befinden sich in einem Bremskreis zwei Radbremseinheiten, beispielsweise zwei Radbremseinheiten an einer gemeinsamen Achse oder im Falle einer diagonalen Aufteilung Radbremseinheiten an unterschiedlichen Achsen und in seitlich gegenüberliegender Position, wobei das Umschaltventil stromauf der Verzweigung in die beiden Zweige mit jeweils einer Radbremseinheit angeordnet ist. Mit dem Schließen des Umschaltventils werden beiden Zweige von der Bremspedalbetätigung durch den Fahrer entkoppelt. Zusätzlich werden die Einlassventile geschlossen, um das Hydraulikvolumen, welches mit der Radbremseinheit kommuniziert, signifikant herabzusetzen, so dass sich eine Bremskolbenverstellung aufgrund einer Betätigung der elektrischen Bremsvorrichtung in einer verhältnismäßig starken Volumenvergrößerung und damit einem signifikanten Druckabbau auswirkt.

Gemäß einer weiteren zweckmäßigen Ausführung ist vorgesehen, dass unterhalb des Druck-Schwellenwerts zuerst eine elektrische Klemmkraft über eine Betätigung des elektrischen Bremsmotors aufgebaut und anschließend das Einlassventil geschlossen wird. Auf diese Weise kann der hydraulische Druck im Bremssystem für den Aufbau einer hydraulischen Klemmkraft ausgenutzt werden. Vorteilhafterweise bestimmt sich die Höhe der elektrischen Klemmkraft aus der Differenz von Ziel-Klemmkraft und hydraulisch einstellbarer Klemmkraft. Da bei dieser Betriebsweise der im hydraulischen System herrschende Druck nicht abgebaut wird, erfolgt die Durchführung vorzugsweise nur unterhalb des Druck-Schwellenwerts, um eine Bauteilüberlastung zu vermeiden.

Bei der Ermittlung der einzustellenden elektrischen Klemmkraft über den elektrischen Bremsmotor kann es zweckmäßig sein, einen Sicherheitsabschlag von der hydraulischen Klemmkraft vorzunehmen, welche im Zeitpunkt des Schließens des Einlassventils wirksam ist. Aufgrund des Sicherheitsabschlags ist der Anteil an elektrischer Klemmkraft höher, so dass insgesamt eine resultierende Klemmkraft mit einem Anteil an elektrischer und einem Anteil an hydraulischer Klemmkraft bereitgestellt wird, die höher ist als ohne Berücksichtigung des Sicherheitsabschlags.

Die Feststellbremse wird üblicherweise von den beiden an der Hinterachse des Fahrzeugs angeordneten Radbremseinheiten gebildet. Jeder Radbremseinheit ist ein Einlassventil im Bremskreis zugeordnet, wobei zur Durchführung des Verfahrens jedes Einlassventil der Radbremseinheit der Feststellbremse bei Überschreitung des Druckschwellenwerts geschlossen wird.

Soweit die Ziel-Klemmkraft ausschließlich und unabhängig vom verbleibenden hydraulischen Druck allein über den elektrischen Bremsmotor eingestellt wird, wird in diesem eine Nominal-Klemmkraft erzeugt, die einer definierten Hangneigung von beispielsweise 20 % entspricht.

Das erfindungsgemäße Verfahren läuft in einem Regel- bzw. Steuergerät ab, welches Bestandteil der Feststellbremse im Fahrzeug ist bzw. mit der Feststellbremse bzw. Komponenten der Feststellbremse kommuniziert. Das Regel- bzw. Steuergerät kann Bestandteil eines ESP-Steuergeräts (elektronisches Stabilitätsprogramm) sein oder eine Zusatzfunktion auf einem ESP-Steuergerät bilden. Gegebenenfalls ist das Steuergerät als separate Einheit ausgeführt, die mit dem ESP-Steuergerät kommuniziert.

Weitere Vorteile und zweckmäßige Ausführungen sind den weiteren Ansprüchen, der Figurenbeschreibung und den Zeichnungen zu entnehmen. Es zeigen:
- Fig.1: einen hydraulischen Schaltplan einer hydraulischen Bremsvorrichtung in einem Fahrzeug, mit einem Vorderachsbremskreis und einem Hinterachsbremskreis,
- Fig. 2: ein Ablaufdiagramm zur Durchführung des Verfahrens zum Einstellen der von einer Feststellbremse ausgeübten Klemmkraft.

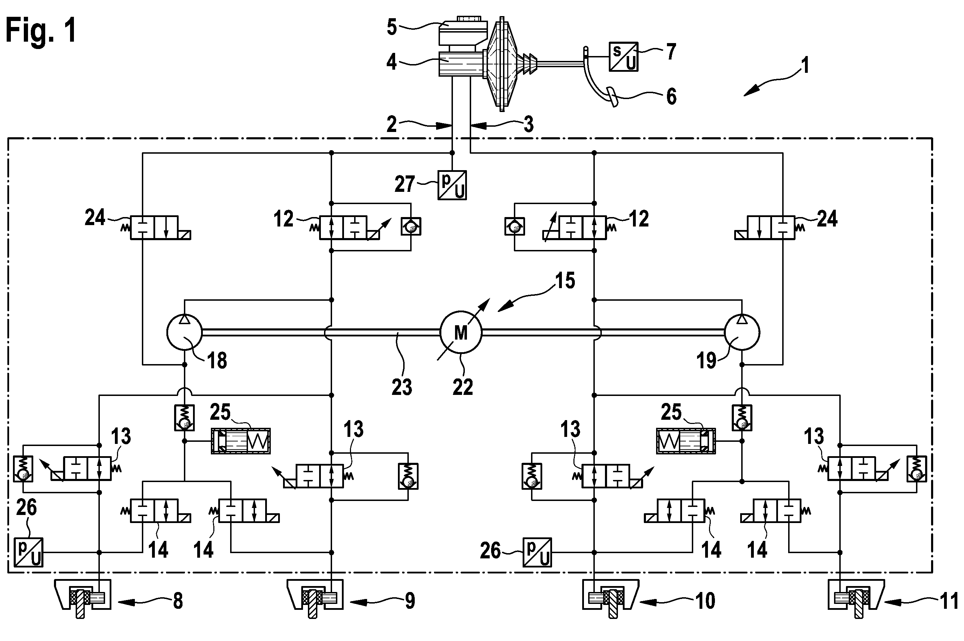

Im Hydraulikschaltplan gemäß Fig. 1 ist eine hydraulische Bremsvorrichtung 1 für ein Fahrzeug mit zwei diagonalen Bremskreisen 2 und 3 zur Versorgung jeweils einer Radbremsvorrichtung 9, 10 am Vorderrad und jeweils einer Radbremsvorrichtung 8, 11 am Hinterrad mit hydraulischem Bremsfluid dargestellt. Beide Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinder 4 wird vom Fahrer über das Bremspedal 6 betätigt. Der vom Fahrer ausgeübte Pedalweg wird über einen Pedalwegsensor 7 gemessen.

In jedem Bremskreis 2, 3 ist ein Umschaltventil 12 angeordnet, das im Strömungsweg zwischen dem Hauptbremszylinder 4 und den jeweiligen Radbremseinheiten 8, 9, 10 und 11 liegt. Die Umschaltventile 12 sind in ihrer stromlosen Grundstellung geöffnet. Jedem Umschaltventil 12 ist ein parallel geschaltetes Rückschlagventil zugeordnet, das in Richtung der jeweiligen Radbremseinheit durchströmbar ist.

Zwischen den Umschaltventilen 12 und den jeweiligen Radbremseinheiten 8, 9, 10, 11 befinden sich Einlassventile 13, die ebenfalls stromlos geöffnet sind. Auch den Einlassventilen 13 sind Rückschlagventile zugeordnet, welche in Gegenrichtung, also von den Radbremseinheiten in Richtung zum Hauptbremszylinder 4, durchströmbar sind.

Des Weiteren ist jeder Radbremseinheit 8, 9, 10, 11 ein Auslassventil 14 zugeordnet, das stromlos geschlossen ist. Die Auslassventile 14 sind jeweils mit der Saugseite einer Pumpeneinheit 15 verbunden, die in jedem Bremskreis 2, 3 eine Pumpe 18, 19 aufweist. Die Pumpeneinheit ist mit einem elektrischen Antriebs- bzw. Pumpenmotor 22 versehen, der über eine Welle 23 die beiden Pumpen 18 und 19 betätigt. Die Druckseite der Pumpe 18 bzw. 19 ist an einen Leitungsabschnitt zwischen dem Umschaltventil 12 und den beiden Einlassventilen 13 pro Bremskreis 2, 3 angeschlossen.

Die Saugseiten der Pumpen 18 und 19 sind jeweils mit einem Hauptschaltventil 24 verbunden, das an den Hauptbremszylinder 4 hydraulisch angeschlossen ist. Bei einem fahrdynamischen Regeleingriff können für einen schnellen Bremsdruckaufbau die im stromlosen Zustand geschlossenen Hauptschaltventile 24 geöffnet werden, so dass die Pumpen 18 und 19 unmittelbar aus dem Hauptbremszylinder 4 Hydraulikfluid ansaugen. Dieser Bremsdruckaufbau kann unabhängig von einer Betätigung der Bremsvorrichtung durch den Fahrer durchgeführt werden. Die Pumpeneinheit 15 mit den beiden Einzelpumpen 18 und 19, dem elektrischen Pumpenmotor 22 und der Welle 23 gehört zu einem Fahrerassistenzsystem, sie bildet insbesondere ein elektronisches Stabilitätsprogramm (ESP).

Zwischen den Auslassventilen 14 und der Saugseite der Pumpen 18 und 19 befindet sich pro Bremskreis 2, 3 ein Hydrospeicher 25, der zur Zwischenspeicherung von Bremsflüssigkeit dient, welche während eines fahrdynamischen Eingriffs durch die Auslassventile 14 aus den Radbremseinheiten 8, 9, 10, 11 ausgelassen wird. Jedem Hydrospeicher 25 ist ein Rückschlagventil zugeordnet, das in Richtung der Saugseiten der Pumpen 18, 19 öffnet.

Zur Druckmessung befindet sich in jedem Bremskreis 2, 3 im Bereich der Radbremseinheiten 8, 9, 10, 11 jeweils ein Drucksensor 26. Ein weiterer Drucksensor 27 (Vordrucksensor) ist im Bremskreis 2 benachbart zum Hauptbremszylinder 4 angeordnet.

Die in Fig. 1 dargestellte hydraulische Bremsvorrichtung 1 ist Bestandteil der Fahrzeugbremse und bildet außerdem einen Teil einer Feststellbremse zum Festsetzen des Fahrzeugs im Stillstand. Die Feststellbremse umfasst zusätzlich zu der hydraulischen Bremsvorrichtung 1 auch eine elektromotorische Bremsvorrichtung mit elektrischen Bremsmotoren, die an den Radbremseinheiten 8 und 11 an den jeweiligen Diagonalen angeordnet sind und die hydraulischen Bremskolben der Radbremseinheiten 8 und 11 beaufschlagen.

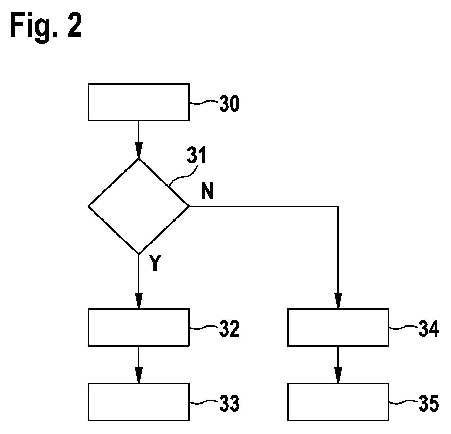

In Fig. 2 ist ein Ablaufdiagramm zur Durchführung des Verfahrens zum Einstellen der Feststellbremse dargestellt, welche auch den Hinterachsradbremsen 8 und 11 der Bremskreise 2 und 3 der hydraulischen Bremsvorrichtung 1 gemäß Fig. 1 umfasst. Im ersten Verfahrensschritt 30 wird zunächst der hydraulische Vordruck p_{h,vor} über den Vordrucksensor 27 in der Bremsvorrichtung festgestellt, der auf eine Bremspedalbetätigung durch den Fahrer zurückgeht. Im folgenden Verfahrensschritt 31 wird der Vordruck p_{h,vor} mit einem Druck-Schwellenwert p_{h,100} verglichen, der beispielsweise bei 100 bar liegt. Übersteigt der Vordruck p_{h,vor} den Druck-Schwellenwert p_{h,100}, so werden Maßnahmen zur Herabsetzung des Drucks ergriffen, um eine Bauteilschädigung in den Radbremseinheiten zu vermeiden.

Wird der Druck-Schwellenwert P_{h,100} in der Abfrage 31 überschritten, wird der Ja-Verzweigung ("Y") folgend zum nächsten Verfahrensschritt 32 fortgefahren, gemäß dem zunächst die Umschaltventile 12 der Bremskreise 2 und 3 und die beiden Einlassventile 13 der hinteren Radbremsen geschlossen werden. Durch Schließen des Umschaltventils 12 wird Unabhängigkeit in den Bremskreisen 2 und 3 von weiteren Betätigungen - insbesondere des Lösens - des Bremspedals 6 erzielt. Durch Schließen der beiden Einlassventile 13 im Hinterachsbremskreis werden die jeweiligen Zweige zwischen jedem Einlassventil 13 und der zugeordneten Radbremseinheit 8 bzw. 11 hydraulisch isoliert. Damit befinden sich in den Radbremseinheiten 8 und 11 nur deutlich herabgesetzte Hydraulikvolumina.

Gemäß nächstem Verfahrensschritt 33 wird die elektrische Bremsvorrichtung betätigt, indem der elektrische Bremsmotor in jeder Radbremseinheit 8 bzw. 11 eine Stellkraft auf den jeweiligen Bremskolben ausübt. Hierdurch wird das für das Fluid zur Verfügung stehende Volumen vergrößert, was mit einer signifikanten Druckherabsetzung in den jeweiligen Radbremseinheiten 8, 11 einhergeht. Über den elektrischen Bremsmotor in jeder Radbremseinheit 8, 11 kann die gewünschte Ziel-Klemmkraft F_{N,Ziel} eingestellt werden.

Ergibt die Abfrage im Verfahrensschritt 31, dass der Vordruck p_{h,vor} in den Bremskreisen 2 und 3 den Druck-Schwellenwert p_{h,100} nicht überschreitet, wird der Nein-Verzweigung ("N") folgend zu den Verfahrensschritten 34 und 35 fortgefahren. Im Verfahrensschritt 34 erfolgt zunächst eine Betätigung des elektrischen Bremsmotors an jeder Radbremseinheit 8, 11 des Hinterachsbremskreises; das Umschaltventil 12 und die beiden Einlassventile 13 der Radbremsen 8 und 11 bleiben zunächst noch geöffnet. Damit wird auch der hydraulische Vordruck p_{h,vor}, der im Hinterachsbremskreis anliegt, an den Radbremseinheiten 8, 11 wirksam. Die Gesamt-Klemmkraft setzt sich zusammen aus der elektromotorisch bereitgestellten Klemmkraft F_{N,el} und der hydraulischen Klemmkraft F_{N,h} in den Radbremseinheiten 8, 11. Hierbei wird die elektrische Klemmkraft F_{N,el} variabel als Funktion des aktuell herrschenden Vordrucks p_{h,vor} bzw. der mit dem Vordruck korrespondierenden hydraulischen Klemmkraft ermittelt. Bei einer gegebenen Ziel-Klemmkraft F_{N,ziel} bestimmt sich die elektrische Klemmkraft F_{N,el} aus der Differenz von Ziel-Klemmkraft F_{N,Ziel} und hydraulischer Klemmkraft F_{N,h}.

Im folgenden Verfahrensschritt 35 werden die Umschaltventile 12 und die beiden Einlassventile 13 der Hinterradbremsen 8 und 11 nach dem Einstellen der elektrischen Klemmkraft F_{N,el} geschlossen. Weitere Bremspedalbetätigungen wirken sich somit nicht mehr auf die Radbremseinheiten aus.

Es kann zweckmäßig sein, bei der Ermittlung der elektrischen Klemmkraft F_{N,el} im Verfahrensschritt 34 von dem Wert der hydraulischen Klemmkraft F_{N,h} einen Sicherheitsabschlag vorzunehmen, beispielweise in Höhe von 20 bar vom aktuell herrschenden Vordruck p_{h,vor}, so dass sich ein entsprechend höherer Anteil der elektrischen Klemmkraft F_{N,el} bei der Einstellung der Ziel-Klemmkraft F_{N,Ziel} ergibt.

## Patentansprüche

1. Verfahren zum Einstellen der von einer Feststellbremse ausgeübten Klemmkraft (F_{N}), wobei die Feststellbremse eine elektromotorische Bremsvorrichtung, welche einen elektrischen Bremsmotor umfasst, und eine hydraulische Bremsvorrichtung aufweist, wobei der elektrische Bremsmotor einen Bremskolben einer hydraulischen Radbremseinheit der hydraulischen Bremsvorrichtung beaufschlagt, **dadurch gekennzeichnet, dass** für den Fall, dass der in der hydraulischen Bremsvorrichtung herrschende Vordruck (p_{h,vor}) einen Druck-Schwellenwert (p_{h,100}) überschreitet, im Bremskreis der hydraulischen Bremsvorrichtung ein Einlassventil, welches zwischen einem Bremszylinder und der Radbremseinheit angeordnet ist, geschlossen und die Ziel-Klemmkraft (F_{N,Ziel}) durch Betätigung der elektromotorischen Bremsvorrichtung eingestellt wird.

2. Verfahren nach Anspruch 1, **dadurch gekennzeichnet, dass** bei Überschreitung des Druck-Schwellenwerts (p_{h,100}) ein im Bremskreis angeordnetes Umschaltventil geschlossen wird, welches im Bremskreis zwischen dem Bremszylinder und dem Einlassventil angeordnet ist.

3. Verfahren nach Anspruch 1 oder 2, **dadurch gekennzeichnet, dass** bei Überschreitung des Druck-Schwellenwerts (p_{h,100}) zuerst das Einlassventil geschlossen und anschließend die elektromotorische Bremsvorrichtung zur Erzeugung einer elektrischen Klemmkraft (F_{N,el}) eingestellt wird.

4. Verfahren nach einem der Ansprüche 1 bis 3, **dadurch gekennzeichnet, dass** unterhalb des Druck-Schwellenwerts (p_{h,100}) zuerst eine elektrische Klemmkraft (F_{N,el}) aufgebaut und anschließend das Einlassventil geschlossen wird.

5. Verfahren nach Anspruch 4, **dadurch gekennzeichnet, dass** die Höhe der elektrischen Klemmkraft (F_{N,el}) so eingestellt wird, dass die Summe aus elektrischer Klemmkraft (F_{N,el}) und hydraulischer Klemmkraft (F_{N,h}), die im Zeitpunkt des Schließens des Einlassventils wirksam ist, die Ziel-Klemmkraft (F_{N,Ziel}) ergibt.

6. Verfahren nach Anspruch 5, **dadurch gekennzeichnet, dass** bei der Ermittlung der einzustellenden elektrischen Klemmkraft (F_{N,el}) ein Sicherheitsabschlag von der Zeitpunkt des Schließens des Einlassventils wirksamen hydraulischen Klemmkraft (F_{N,h}) vorgenommen wird.

7. Verfahren nach einem der Ansprüche 1 bis 6, **dadurch gekennzeichnet, dass** zwei Einlassventile vorgesehen sind, die in jeweils einem Zweig des Bremskreises mit je einer Radbremseinheit angeordnet sind und bei Überschreitung des Druck-Schwellenwerts (p_{h,100}) geschlossen werden.

8. Verfahren nach einem der Ansprüche 1 bis 7, **dadurch gekennzeichnet, dass** die in der elektromotorischen Bremsvorrichtung erzeugte Klemmkraft (F_{N,el}) auf einen Nominalwert eingestellt wird, der einer definierten Hangneigung entspricht.

9. Regel- bzw. Steuergerät für die Regelung bzw. Steuerung einer Feststellbremse zur Durchführung des Verfahrens nach einem der Ansprüche 1 bis 8, **dadurch gekennzeichnet, dass** die Feststellbremse eine elektromotorische Bremsvorrichtung, welche einen elektrischen Bremsmotor umfasst, und eine hydraulische Bremsvorrichtung aufweist, wobei der elektrische Bremsmotor einen Bremskolben einer hydraulischen Radbremseinheit der hydraulischen Bremsvorrichtung beaufschlagt und wobei im Bremskreis der hydraulischen Bremsvorrichtung ein Einlassventil vorgesehen ist.

10. Feststellbremse in einem Fahrzeug mit einem Regel- bzw. Steuergerät nach Anspruch 9.

## Claims

1. Method for setting the clamping force (F_{N}) imparted by a parking brake, wherein the parking brake has an electromotive brake device, which comprises an electric brake motor, and said parking brake has a hydraulic brake device, wherein the electric brake motor acts on a brake piston of a hydraulic wheel brake unit of the hydraulic brake device, **characterized in that**, if the admission pressure (p_{h,adm}) prevailing in the hydraulic brake device exceeds a pressure threshold value (p_{h,100}), in the brake circuit of the hydraulic brake device, an inlet valve which is arranged between a brake cylinder and the wheel brake unit is closed, and the target clamping force (F_{N,target}) is set by actuation of the electromotive brake device.

2. Method according to Claim 1, **characterized in that**, in the event of an exceedance of the pressure threshold value (p_{h,100}), a switchover valve arranged in the brake circuit is closed, said switchover valve being arranged in the brake circuit between the brake cylinder and the inlet valve.

3. Method according to Claim 1 or 2, **characterized in that**, in the event of an exceedance of the pressure threshold value (p_{h,100}), firstly, the inlet valve is closed, and subsequently, the electromotive brake device is set so as to generate an electric clamping force (F_{N,el}).

4. Method according to one of Claims 1 to 3, **characterized in that**, below the pressure threshold value (p_{h,100}) firstly, an electric clamping force (F_{N,el}) is built up, and subsequently, the inlet valve is closed.

5. Method according to Claim 4, **characterized in that** the magnitude of the electric clamping force (F_{N,el}) is set such that the sum of electric clamping force (F_{N,el}) and hydraulic clamping force (F_{N,h}) active at the time of the closure of the inlet valve yields the target clamping force (F_{N,target}).

6. Method according to Claim 5, **characterized in that**, in the determination of the electric clamping force (F_{N,el}) to be set, a safety deduction from the hydraulic clamping force (F_{N,h}) active at the time of the closure of the inlet valve is performed.

7. Method according to one of Claims 1 to 6, **characterized in that** two inlet valves are provided which are arranged in in each case one branch of the brake circuit with a respective wheel brake unit, and are closed in the event of an exceedance of the pressure threshold value (p_{h,100}).

8. Method according to one of Claims 1 to 7, **characterized in that** the clamping force (F_{N,el}) generated in the electromotive brake device is set to a nominal value which corresponds to a defined slope gradient.

9. Closed-loop and/or open-loop control unit for the closed-loop and/or open-loop control of a parking brake for carrying out the method according to one of Claims 1 to 8, **characterized in that** the parking brake has an electromotive brake device, which comprises an electric brake motor, and said parking brake has a hydraulic brake device, wherein the electric brake motor acts on a brake piston of a hydraulic wheel brake unit of the hydraulic brake device, and wherein an inlet valve is provided in the brake circuit of the hydraulic device.

10. Parking brake in a vehicle having a closed-loop and/or open-loop control unit according to Claim 9.

## Revendications

1. Procédé de réglage de la force de serrage (F_{N}) exercée par un frein de stationnement, dans lequel le frein de stationnement comporte un dispositif de freinage à moteur électrique qui comprend un moteur de freinage électrique et un dispositif de freinage hydraulique, dans lequel le moteur de freinage électrique sollicite un piston de freinage d'une unité de freinage de roue hydraulique du dispositif de freinage hydraulique, **caractérisé en ce que**, dans le cas où la pression préalable observée dans le dispositif de freinage hydraulique (p_{h,vor}) dépasse une valeur de seuil de pression (p_{h,100}), une soupape d'admission disposée entre un cylindre de freinage et l'unité de freinage de roue est fermé dans le circuit de freinage du dispositif de freinage hydraulique et la force de serrage cible (F_{N}, _{Ziel}) est réglée par actionnement d'un dispositif de freinage à moteur électrique.

2. Procédé selon la revendication 1, **caractérisé en ce que**, lorsque la valeur de seuil de pression (p_{h,100}) est dépassée, une soupape d'inversion disposée dans le circuit de freinage, qui est disposée dans le circuit de freinage entre le cylindre de freinage et la soupape d'admission, est fermée.

3. Procédé selon la revendication 1 ou 2, **caractérisé en ce que**, lorsque la valeur de seuil de pression (p_{h,100}) est dépassée, la soupape d'admission est tout d'abord fermée puis le dispositif de freinage à moteur électrique est réglé pour générer une force de serrage électrique (F_{N,el}).

4. Procédé selon l'une quelconque des revendications 1 à 3, **caractérisé en ce qu'**en dessous de la valeur de seuil de pression (p_{n,100}), une force de serrage électrique (F_{N,el)} est tout d'abord établie puis la soupape d'admission est fermée.

5. Procédé selon la revendication 4, **caractérisé en ce que** l'intensité de la force de serrage électrique (F_{N,el}) est réglée de manière à ce que la somme de la force de serrage électrique (F_{N,el}) et de la force de serrage hydraulique (F_{N,h}), qui agit à l'instant de la fermeture de la soupape d'admission, donne la force de serrage cible (F_{N,Ziel}).

6. Procédé selon la revendication 5, **caractérisé en ce que**, lorsque la force de serrage électrique (F_{N,el}) devant être réglée est atteinte, une réduction de sécurité de la force de serrage hydraulique (F_{N,h}) active est effectuée à l'instant de fermeture de la soupape d'admission.

7. Procédé selon l'une quelconque des revendications 1 à 6, **caractérisé en ce qu'**il est prévu deux soupapes d'admission qui sont respectivement disposées dans une branche respective du circuit de freinage dotée d'une unité de freinage de roue et qui sont fermées en dessous de la valeur de seuil de pression (p_{h,100}).

8. Procédé selon l'une quelconque des revendications 1 à 7, **caractérisé en ce que** la force de serrage (F_{N,el}) générée dans le dispositif de freinage à moteur électrique est réglée à une valeur nominale qui correspond à une pente définie.

9. Appareil de régulation ou de commande destiné à réguler ou commander un frein de stationnement par mise en oeuvre du procédé selon l'une quelconque des revendications 1 à 8, **caractérisé en ce que** le frein de stationnement comporte un dispositif de freinage, qui comprend un moteur de freinage électrique, et un dispositif de freinage hydraulique, dans lequel le moteur de freinage électrique sollicite un piston de freinage d'une unité de freinage de roue hydraulique du dispositif de freinage hydraulique et dans lequel une soupape d'admission est prévue dans le circuit de freinage du dispositif de freinage hydraulique.

10. Frein de stationnement dans un véhicule comportant un appareil de régulation ou de commande selon la revendication 9.
